# EUROPEAN PATENT SPECIFICATION

(11) **EP 3 484 025 B1**
(45) Date of publication and mention of the grant of the patent: **30.09.2020**
(21) Application number: 18204978.3
(22) Date of filing: 07.11.2018
(51) Int. Cl.: H02K 7/12, H02K 5/167, H02K 26/00, H02K 33/16, F16F 15/03, F16F 6/00, G05G 5/03, H02K 7/06, G05G 1/30

(54) **ACTUATOR WITH ADJUSTABLE PASSIVE CHARACTERISTIC AND ACTIVE ADAPTATION OF SAID CHARACTERISTIC**
AKTUATOR MIT EINSTELLBARER PASSIVER EIGENSCHAFT UND AKTIVER ANPASSUNG DIESER EIGENSCHAFT
ACTIONNEUR AVEC CARACTÉRISTIQUE PASSIVE AJUSTABLE ET ADAPTATION ACTIVE DE LADITE CARACTÉRISTIQUE

(30) Priority: 13.11.2017 SI 201700304
(43) Date of publication of application: 15.05.2019
(73) Proprietor: SiEVA d.o.o., PE Lipnica, 4245 Kropa (SI)
(72) Inventor: MUNIH, Tomaz, 1360 Vrhnika (SI); SAJEVIC, Samo, 4000 Kranj (SI); SVAB, Domen, 4275 Begunje (SI)
(74) Representative: Jersan, Tatjana

(56) References cited:
- EP-A1- 2 117 104
- WO-A1-2015/033851
- DE-A1-102016 105 098
- JP-A- 2004 068 906
- US-A- 2 824 520
- US-A- 2 978 621

## Description

### Object of invention

The object of the invention is an actuator or a magnetic spring that can adjust a static and dynamic force characteristic to an output shaft by way of a excitation of a single-phase winding. A dynamic characteristic may be of any time scale, which means that a dynamic response can result in the generation of haptic vibrations, pulse vibrations, or a change in the force on the axle for a longer period of time. All functions may be managed by a single winding or by two connecting terminals.

### Technical problem

The technical problem solved by the invention is how to join several different functions into one compact actuator that is excited by a single-phase winding. The actuator enables a static characteristic, i. e. functioning without excitation. The static characteristic is adjustable. The static characteristic adjusted in a desired manner can further be changed by dynamic responses.

### Prior art

Competitive actuators of this type are normally multi-phase actuators. Examples of such actuators are described in patents US 8378531 B2, US8820190 B2 and patent application US 2017/0260767 A1. When functioning, they need constant excitation which causes problems with their getting overheated. Since they constantly need input electrical power while operating, they are not the most adequate for power-saving/electric vehicles.

In general, more complex mechanical approaches can be used to solve a similar problem, wherein a separate drive is used for each desired function. These variants are somewhat more economical than electromagnetic actuators which require constant power supply for their operation. Examples of such actuators/assemblies are described in US 7770491 B2, US 8175783 B2, US 8042430 B2, US 7926384 B2, US 2013/0091977 A1, US 2012/0169488 A1, US 2012/0167708 A1, US 2011/0083528 A1, US 7631574 B2.

Similar assemblies are disclosed in patent documents DE 10 2016 105098, WO2015/033865, US2824520, EP2117104, JP2004/068906 and US2978621, however none of the documents are disclosing a compact actuator acting as a magnetic spring with adjustable static and dynamic force characteristic to an output shaft by way of a single excitation winding as disclosed in the present application.

### Solution to the technical problem

It is the task and the goal of the invention to configure a compact actuator that will enable all desired and anticipated functions, wherein it will be excited by a single phase only. This means that the connection is carried out via only two electrical contacts. Another goal is that the actuator is as power-saving as possible. The energy is consumed only while setting its static characteristics and while changing its characteristic dynamically with short pulsations or haptic operation. Otherwise the static characteristic of the axial force used as an output, once the static characteristic is pre-set, is ensured without electrical excitation. As the actuator is a single-phase actuator, it contributes to simplifications and price reductions also in the control/supply circuit.

The present invention concerns a single-phase actuator, used as an accelerator pedal actuator, which acts as a magnetic spring and which, in the absence of a power supply, has a pre-adjusted force characteristic, i.e. the static characteristic of the axial force used as an output is pre-adjusted.. The actuator of the invention consists of a housing, a lamellated stator wound with a single-phase winding and an armature representing a movable part of the actuator and consisting of an axle and a rotor supported on the axle and wherein the axle is blocked to rotation around its axis. The force characteristic can be pre-adjusted by rotating the rotor along the axle, i.e. by rotary and linear movement of the rotor relative to the axle. Once the force characteristic is pre-adjusted, the rotor is held in said pre-adjusted static characteristic without excitation. In the event of pulse operation, force pulsation is achieved in conformity to current pulsation. Longer pulses or fine haptic vibrations can thus be generated.

The invention will be explained in more detail hereinbelow by way of embodiments and the enclosed drawings.
Figure 1 shows a characteristic of a force as a function of mutual axial position of a stator and an armature
Figure 2 shows a change in the characteristic of a force at various magnet lengths as a function of mutual axial position of a stator and an armature
Figure 3 shows a concept of a merger of a magnet and an axle, wherein the magnet functions as a nut and the axle functions as a helical line
Figure 4 shows a longitudinal cross-section of the actuator of the invention having a magnet height that is identical to the height of the stator core;
Figure 5 shows a longitudinal cross-section of the actuator of the invention having a magnet height that is lower than the height of the stator core;
Figure 6 shows a cross-section of the actuator of the invention having a magnet height that is identical to the height of the stator core;
Figure 7 shows a longitudinal cross section of the armature, i. e. the movable part of the actuator;
Figure 8 shows an axonometric view of the magnetically active components of the actuator of the invention, where the magnetically active components are identical in height to the stator core;
Figure 9 shows an example of characteristics of the actuator of the invention in case of identical axial lengths of the armature and the stator;
Figure 10 shows an example of characteristics of the actuator of the invention in case of a shorter axial length of the armature compared to the axial length of the stator and an additional spring.

The actuator of the invention is as defined in the appended claims.

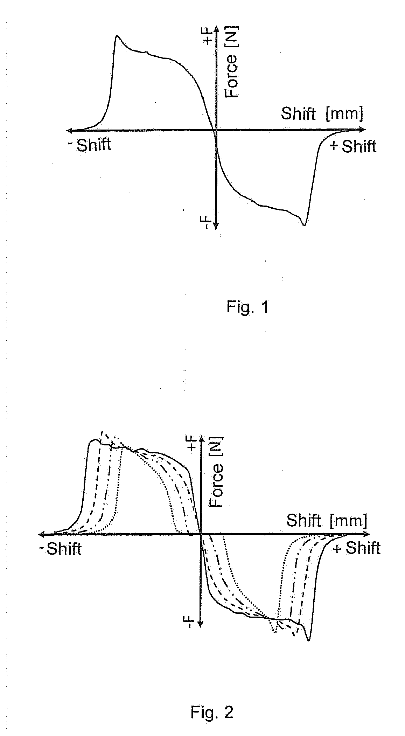

The actuator of the invention is based on a single-phase stepper motor also known as a "Lavet-type stepping motor" that is described in patents EP 0238934 A2, US 4720644, US 6731093 B1. Such motors are most frequently found in clock mechanisms or other simple low-power apparatuses. The rotor is most frequently a two-pole magnet provided with a specially shaped air gap in a stator core. The gap is shaped in a way that the direction of the magnetic field of the rotor in a non-excited state of the stator winding is offset by a certain angle from a direction, in which the stator magnetic field is produced when the stator winding is excited. When the rotor is axially displaced from the stator core in such a motor, a force appears that draws it back to the central, magnetically neutral position; this is shown in Figure 1.

The acting magnetic force is a reluctance force, which means it is present also when the stator winding is not excited. This can be profitably used as a linear magnetic spring. The characteristic of the spring can be adapted by variously combining of axial lengths of the rotor and stator and by the shape of the air gap; this is shown in Figure 2.

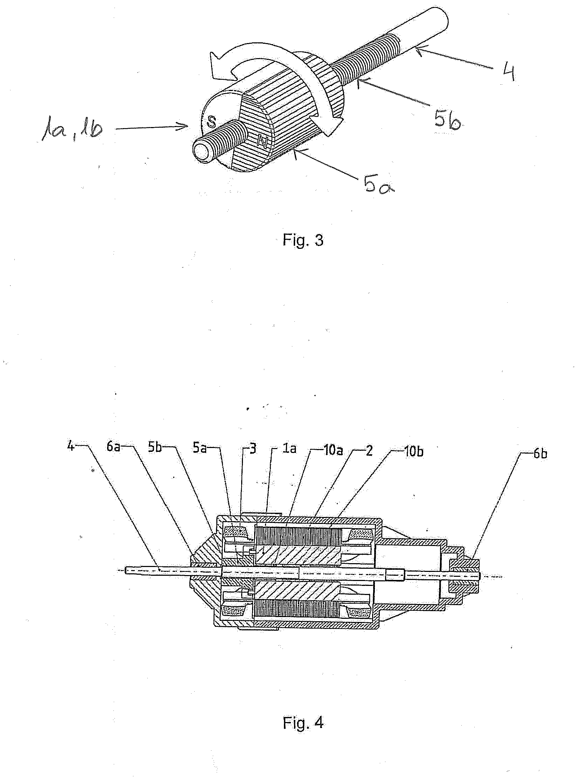

If a conventional fixed link of a rotor and an axle that is normally impressed or moulded is replaced by a link similar to a threaded spindle, wherein the rotation-proof axle functions as a screw and the rotor functions as a nut, a magnetic spring or the actuator of the invention (Figure 3) is obtained; by rotating the rotor, the actuator's starting position on the axle can be adjusted and consequently its static characteristic. Figure 3 shows the principle of coupling the rotor and the axle, i. e. the armature, which represents the movable part of the actuator of the invention.

By exciting the stator winding, the force of the magnetic spring can be increased by a different time constant. In this way, haptic vibrations and pulsations of any length can be generated. Moreover, the same stator winding can be used to "wind and unwind" the rotor along the threaded axle, wherewith the static characteristic of the magnetic spring is altered. This is the characteristic which acts on the axle even when the winding is not being excited. Here, we get passive operation with a desired characteristic.

In the actuator of the invention, the axial force is used as the output. A unidirectional excitation of the phase winding changes the force and the characteristic is hence temporarily, i. e. dynamically, changed. An alternate excitation of the same phase winding generates torque on the core of the armature, i. e. on the rotor, wherewith the static characteristic is regulated/adjusted. The entire armature assembly has translation in axial direction enabled, while rotation is disabled. The magnetically active part of the armature, i. e. the rotor, which is coupled to the axle via helical line can be any combination of a hard magnetic material, a soft magnetic material or a composite, and has rotation and consequently a shift along the helical line on the axle enabled.

The actuator of the invention can have the stator winding assembled in a way that the parts of the same winding are connected among each other either in parallel or in series. The actuator of the invention is primarily used as an accelerator pedal actuator.

In the following, two embodiments of the actuator of the invention will be presented, wherein the actuator is used for an accelerator pedal.

The actuator of the invention represented in Figure 4 consists of a stator 2 that is lamellated to generate better electromagnetic responses, and an armature. The stator 2 is wound with a single-phase winding 3. The linearly movable armature, i. e. the movable part of the actuator, consists of an axle 4 having a fixed rotational degree of freedom, i.e. the axle 4 is blocked to rotation around its axis. Its linear shift is enabled by a second set of two sliding bearings 6a, 6b, the axle 4 is provided with a rotating magnet 1a or a rotor that is connected to the axle 4 by a screw connection 5a, 5b, i.e. the axle 4 functions as a thread 5b and the magnet 1a functions as a nut 5a, and a first set of sliding bearings 10a, 10b. The rotating magnet 1a is a diametrically magnetized permanent magnet, i.e. a two pole radially magnetized cylindrical permanent magnet.

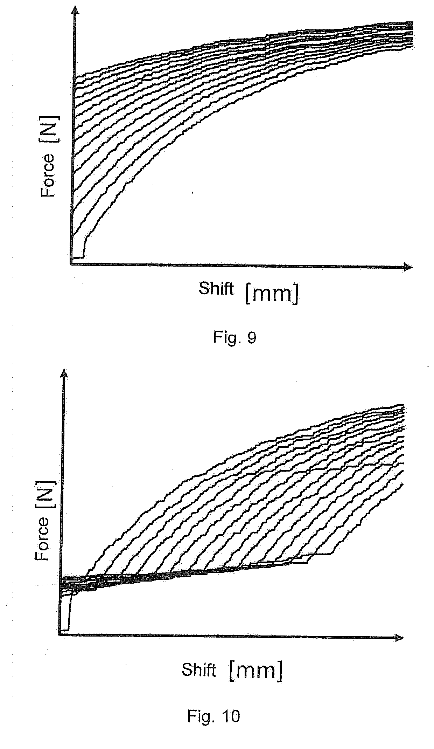

The fundamental function of the axle 4 is that of a magnetic spring in axial direction, wherein by rotary and linear movement of the magnet 1a relative to the axle 4, the static characteristic of the force is changed, i. e. "pre-stressing" of the magnetic spring; this is shown in Figure 9. As illustrated in Figure 9, the characteristic of the force changes by the movement of the armature along the axle 4. The larger the initial mutual shift of the armature and the stator from an aligned position, the higher the static characteristic of the force. The rotary and linear movement of the magnet 1a relative to the axle 4 in one or the other direction is achieved by an alternate excitation of the single-phase winding 3 of the stator 2. The unidirectional excitation of the same single-phase winding 3 of the stator 2 can result in a haptic response or any desired linear pulsation of the axial force, with which the armature withstands the shift.

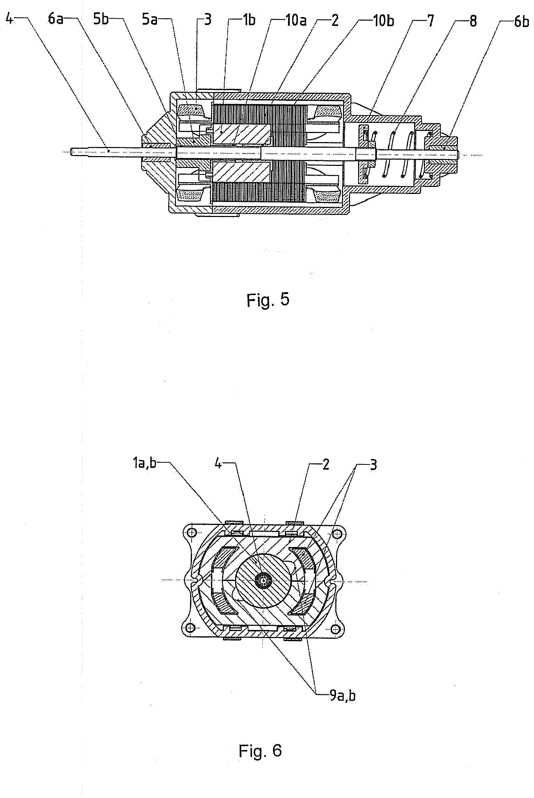

The actuator of the invention represented in Figure 5 consists of a stator 2 that is lamellated to generate better electromagnetic responses, and an armature. The stator 2 is wound with a single-phase winding 3. The linearly movable armature, i. e. the movable part of the actuator, consists of an axle 4 having a fixed rotational degree of freedom, i.e. the axle 4 is blocked to rotation around its axis. Its linear shift is enabled by a second set of two sliding bearings 6a, 6b, the axle 4 is provided with a rotating magnet 1b or a rotor that is connected to the axle 4 by a screw connection 5a, 5b, i.e. the axle 4 functions as a thread 5b and the magnet 1b functions as a nut 5a, and a first set of sliding bearings 10a, 10b. The rotating magnet 1b is a diametrically magnetized permanent magnet, i.e. a two pole radially magnetized cylindrical permanent magnet.

The fundamental function of the axle 4 is that of a magnetic spring in axial direction, wherein by rotary and linear movement of the magnet 1b relative to the axle 4, the static characteristic is changed, i. e. "pre-stressing" of the magnetic spring. The rotary and linear movement of the magnet 1b relative to the axle 4 in one or the other direction is achieved by an alternate excitation of the single-phase winding 3 of the stator 2. The unidirectional excitation of the same single-phase winding 3 of the stator 2 can result in a haptic response or any desired pulsation of the force, with which the armature moves. Compared to the variant of the actuator in Figure 4, this variant of the actuator has the magnet 1b shorter than the stator 2. A spring 8 and a washer 7 are added, their function is to provide for an adequate static characteristic of the actuator, i.e. by the spring 8 the axial force imparted to the axle 4 without excitation is increased, which is shown in Figure 10. As evident from Figure 10, the mechanical spring 8 contributes its share of the static characteristic, which is determined by the coefficient of the spring 8 and its pre-stressing. The magnetic part of the actuator contributes adjustable static characteristics in the shape of steps. As in the case of the actuator having identical axial lengths of the rotor and stator, the dynamic changes in characteristics are enabled here, too.

Figure 6 shows the actuator of the invention in cross-section, wherein the lamellated stator 2, on which two notches 9a, 9b serving for the neutral position of the magnet 1a, 1b, is in a passive state without power supply. This position is offset from the main magnetic direction, i. e. vertical direction, by such an angle that by alternate excitation can rotate the magnet 1a, 1b in one or the other direction.

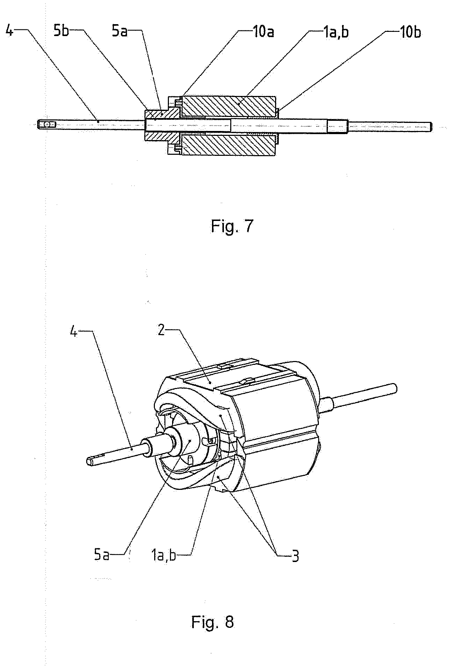

Figure 7 shows the armature of the actuator of the invention, said armature consisting of an axle 4 and a magnet 1a, 1b. The magnet 1a, 1b is coupled with the axle 4 via a screw connection 5a and 5b, i.e. the axle 4 functions as a thread 5b and the magnet 1a, 1b functions as a nut 5a. By rotary and linear movement of the magnet 1a, 1b, the position of the magnet 1a, 1b with respect to the axle 4 changes adequately with the thread pitch. The magnet 1a, 1b is additionally supported on the axle 4 by the first set of sliding bearings 10a and 10b, which see to it that the magnet 1a, 1b and the axle 4 are centred and said bearings at the same time enable rotary and linear shift of the magnet 1a, 1b relative to the axle 4.

Figure 8 illustrates an axonometric view of the magnetically active components of the actuator of the invention.

## Claims

1. An actuator, wherein an axial force is used as an output, said actuator consists of:
a housing,
a lamellated stator (2) wound with a single-phase winding (3) and an armature representing a part of the actuator movable in a linear direction and consisting of an axle (4) and a magnet (1a, 1b), supported on the axle (4), wherein the magnet (1a, 1b) is a two pole radially magnetized cylindrical permanent magnet and wherein the magnet (1a, 1b) is separated by a radial air gap from the stator (2), wherein the shape of the radial air gap is defined by two notches (9a, 9b) provided in the stator (2), wherewith the direction of the magnetic field on the magnet in a non-excited state of the stator winding (3) is offset by a certain angle from a direction in which the stator magnetic field is produced when the stator winding (3) is excitated,
**characterized in that**,
the axle (4) is supported in the housing by a second set of sliding bearings (6a, 6b) for linear shifting of the axle (4) relative to the stator (2) and the axle (4) is blocked to rotation around its axis,
wherein the magnet (1a, 1b) is supported on the axle (4) by a first set of sliding bearings (10a, 10b) and is coupled with the axle (4) via a screw connection formed as a thread (5b) on the axle (4) and as a nut (5a) on the magnet (1a, 1b) for centering the magnet (1a, 1b) and the axle (4), and for rotary and linear movement of the magnet (1a, 1b) relative to said axle (4),
whereby by an alternate excitation of the single phase winding (3) of the stator (2), a torque on the magnet (1a, 1b) is generated thereby shifting the magnet (1a, 1b) via the screw connection and the first set of sliding bearings (10a, 10b) in linear direction along the axle (4) and by shifting the magnet (1a, 1b), the static characteristic of the actuator is regulated, when the actuator acts as a magnetic spring.

2. Actuator according to claim 1, wherein the winding (3) of the stator (2) is assembled in a way that the parts of the same winding are connected among each other either in parallel or in series.

3. Actuator according to claims 1 and 2, wherein the axial length of the magnet (1a, 1b) is shorter than the axial length of the stator (2) and the actuator additionally consists of a washer (7) and a spring (8) mounted on the axle (4) and positioned in the housing on the side oposite of the screw connection, whereby by the spring (8) the axial force imparted to the axle (4) without excitation in the starting position is increased.

## Patentansprüche

1. Aktuator, bei dem als Ausgang eine Axialkraft verwendet wird, bestehend aus:
einem Gehäuse,
einem, mit einer einphasigen Wicklung (3) gewickelten lamellenförmigen Stator (2) und einem Anker, als in linearer Richtung bewegliches Teil des Aktuators und bestehend aus einer Achse (4) und einem auf der Achse (4) abgestützten Magneten (1a, 1b), wobei der Magnet (1a, 1b) ein zweipoliger radial magnetisierter zylindrischer Permanentmagnet ist und wobei der Magnet (1a, 1b) durch einen radialen Luftspalt vom Stator (2) getrennt ist, wobei die Form des radialen Luftspalts durch zwei im Stator (2) vorgesehene Kerben (9a, 9b) definiert ist, womit die Richtung des Magnetfelds auf dem Magneten in einem nicht erregten Zustand der Statorwicklung (3) um einen bestimmten Winkel aus der Richtung, in der das Statormagnetfeld bei Erregung der Statorwicklung (3) erzeugt wird, versetzt ist,
**dadurch gekennzeichnet, dass**
die Achse (4) im Gehäuse durch einen zweiten Satz von Gleitlagern (6a, 6b) zur linearen Verschiebung der Achse (4) gegenüber dem Stator (2) abgestützt ist und die Achse (4) drehfest um ihre Achse blockiert ist,
wobei der Magnet (1a, 1b) durch einen ersten Satz von Gleitlagern (10a, 10b) an der Achse (4) abgestützt ist und über eine als Gewinde (5b) an der Achse (4) ausgebildete Schraubverbindung und als Mutter (5a) am Magneten (1a, 1b) zur Zentrierung des Magneten (1a, 1b) und der Achse (4) und zur Dreh- und Linearbewegung des Magneten (1a, 1b) relativ zu dieser Achse (4) gekoppelt ist,
wobei durch eine abwechselnde Erregung der Einphasenwicklung (3) des Stators (2) ein Drehmoment am Magneten (1a, 1b) erzeugt wird, wodurch der Magnet (1a, 1b) über die Schraubverbindung und den ersten Satz von Gleitlagern (10a, 10b) in linearer Richtung entlang der Achse (4) verschoben wird und durch Verschieben des Magneten (1a, 1b) die statische Charakteristik des Aktuators geregelt wird, wenn der Aktuator als Magnetfeder fungiert.

2. Aktuator nach Anspruch 1, **dadurch gekennzeichnet, dass** die Wicklung (3) des Stators (2) derart aufgebaut ist, dass die Teile derselben Wicklung entweder parallel oder in Reihe miteinander verbunden sind.

3. Aktuator nach Anspruch 1 und 2, **dadurch gekennzeichnet, dass** die axiale Länge des Magneten (1a, 1b) kürzer als die axiale Länge des Stators (2) ist und der Aktuator zusätzlich aus einer Unterlegscheibe (7) und einer, auf der Achse (4) gelagerten und im Gehäuse an der gegenüberliegenden Seite der Schraubverbindung angeordneten Feder (8) besteht, wobei durch die Feder (8), die, in der Ausgangsposition auf die Achse (4) ausgeübte Axialkraft, erhöht wird.

## Revendications

1. Actionneur, dans lequel une force axiale est utilisée en tant que sortie, ledit actionneur étant constitué de :
un boîtier,
un stator à lamelles (2) enroulé avec un enroulement monophasé (3) et un induit constituant une partie de l'actionneur mobile dans une direction linéaire et constitué de
un axe (4) et un aimant (1a, 1b), supportés sur l'axe (4), l'aimant (1a, 1b) étant un aimant permanent cylindrique à aimantation radiale à deux pôles et l'aimant (1a, 1b) étant séparé du stator (2) par un entrefer radial, la forme de l'entrefer radial étant définie par deux encoches (9a, 9b) prévues dans le stator (2), la direction du champ magnétique sur l'aimant dans un état non excité de l'enroulement de stator (3) étant décalée d'un certain angle par rapport à la direction dans laquelle le champ magnétique du stator est produit lorsque l'enroulement de stator (3) est excité,
**caractérisé en ce que**
l'axe (4) est supporté dans le boîtier par un deuxième ensemble de paliers coulissants (6a, 6b) pour un déplacement linéaire de l'axe (4) par rapport au stator (2) et l'axe (4) est bloqué en rotation autour de son axe,
l'aimant (1a, 1b) étant supporté sur l'axe (4) par un premier ensemble de paliers coulissants (10a, 10b) et couplé à l'axe (4) par l'intermédiaire d'un raccord à vis formé en tant que filetage (5b) sur l'axe (4) et en tant qu'écrou (5a) sur l'aimant (1a, 1b) pour centrer l'aimant (1a, 1b) et l'axe (4), et pour un mouvement rotatif et linéaire de l'aimant (1a, 1b) par rapport audit axe (4),
où grâce à une excitation alternée de l'enroulement monophasé (3) du stator (2), un couple est généré sur l'aimant (1a, 1b), déplaçant ainsi l'aimant (1a, 1b) par l'intermédiaire du raccord à vis et du premier ensemble de paliers coulissants (10a, 10b) dans une direction linéaire le long de l'axe (4) et par le déplacement de l'aimant (1a, 1b), la caractéristique statique de l'actionneur est régulée, lorsque l'actionneur agit comme un ressort magnétique.

2. Actionneur selon la revendication 1, dans lequel l'enroulement (3) du stator (2) est assemblé de telle sorte que les parties du même enroulement sont connectées l'une à l'autre soit en parallèle soit en série.

3. Actionneur selon les revendications 1 et 2, dans lequel la longueur axiale de l'aimant (1a, 1b) est inférieure à la longueur axiale du stator (2) et l'actionneur est en outre constitué d'une rondelle (7) et d'un ressort (8) monté sur l'axe (4) et positionné dans le boîtier sur le côté opposé au raccord à vis, moyennant quoi, par le ressort (8), la force axiale communiquée à l'axe (4) sans excitation dans la position de démarrage est augmentée.
